# EUROPÄISCHE PATENTANMELDUNG

(11) **EP 3 650 175 A1**
(43) Veröffentlichungstag der Anmeldung: **13.05.2020**
(21) Anmeldenummer: 18204528.6
(22) Anmeldetag: 06.11.2018
(51) Int. Cl.: B25B 27/10, B25F 5/00

(54) **HYDRAULISCHE PUMPEN-VENTILVORRICHTUNG FÜR EINE PRESSMASCHINE**

(71) Anmelder: Von Arx AG, 4450 Sissach (CH)
(72) Erfinder: RUCH, Matthias, 79588 Efringen-Kirchen (DE); KREUZER, Rudolf, 5033 Buchs (CH)
(74) Vertreter: Mader, Joachim

(57) **Zusammenfassung**

Die vorliegende Erfindung betrifft eine Pressmaschine 10 zum plastischen Verformen eines rohrförmigen Werkstücks. Die Pressmaschine 10 umfasst einen Antrieb, ein Reservoir zum Breitstellen eines Hydraulikfluids, eine Koppelschnittstelle 30 zum Koppeln der Pressmaschine 10 mit einer Pressbackenanordnung 20, und eine hydraulische Pumpen-Ventilvorrichtung 60. Die hydraulische Pumpen-Ventilvorrichtung umfasst einen Druckzylinder, einen Arbeitszylinder und ein Überdruckventilelement, welches dazu eingerichtet ist, einen Fluiddurchgang vom Arbeitszylinder zum Reservoir beim Erreichen eines vordefinierten maximalen Pressdrucks zu öffnen und offen zu halten bis der Arbeitskolben in eine erste Stellung zurückgekehrt ist.

## Beschreibung

### 1. Technisches Gebiet

Die vorliegende Erfindung betrifft eine Pressmaschine, insbesondere eine handgeführte Pressmaschine, zum Verpressen von rohrförmigen Werkstücken, sowie ein Verfahren zum Betreiben einer Pressmaschine.

### 2. Stand der Technik

Im Stand der Technik sind mehrere Verfahren zum Verbinden von rohrförmigen Werkstücken bekannt. Beispielsweise können Rohre miteinander verlötet oder verschweißt werden. Weiterhin ist bekannt, das Ende eines kleineren Rohres in ein Rohrende eines größeren Rohres einzustecken und anschließend beide Rohrenden miteinander zu verpressen.

In anderen Fällen wird das Verpressen mit Hilfe eines (Press-)Fittings durchgeführt. Dazu können Pressmaschinen, wie beispielsweise Rohrpressmaschinen, verwendet werden, um ein Rohr mit einem Pressfitting zu verbinden. Ein solches Fitting kann zum Beispiel als Rohrleitungsfitting ausgestaltet sein, welches als Verbindungsstück einer Rohrleitung verwendet werden kann. Die zu verbindenden Rohrenden werden in das Fitting eingesteckt und das Fitting anschließend mit den Rohrenden verpresst. Ein Fitting kann aus verschiedenen Materialien bestehen, beispielsweise aus Kupfer, Aluminium, Kunststoff, Komposit und/oder (Edel-)Stahl.

Das Verpressen wird typischerweise mit einer handgeführten und motorbetriebenen Pressmaschine (Presswerkzeug) durchgeführt. Typischerweise kommen elektrische und/oder hydraulische Antriebe zum Einsatz. Die Pressmaschine kann austauschbare Werkzeuge, wie beispielsweise Pressbacken mit unterschiedlichen Größen und Geometrien aufweisen. Eine (Rohr-)Pressmaschine kann beispielsweise Pressbacken aus Kupfer oder Stahl umfassen. Weiterhin kann die Pressmaschine einen austauschbaren Werkzeugkopf, wie eine Presszange umfassen, der die Pressbacken aufweist. Daneben sind Pressmaschinen auch für andere Aufgaben bekannt, beispielsweise werden Pressmaschinen zum Pressen, Crimpen oder Schneiden von Werkstücken, beispielsweise in der Elektroindustrie, verwendet. Insbesondere kann an der Pressmaschine ein aufgabenspezifischer Werkzeugkopf und/oder aufgabenspezifische Pressbacken angeordnet werden, um Werkstücke entsprechend zu bearbeiten.

Bei einer handgeführten Pressmaschine werden die Pressbacken zum Verpressen um den Pressfitting herum angeordnet. Beim Schließen der Pressbacken wird eine Kraft auf die Oberfläche des Pressfittings ausgeübt, so dass das Fitting zusammengedrückt wird und sich dabei plastisch verformt, wodurch die Werkstücke sicher miteinander verbunden werden. Hierbei können auch die innenliegenden Rohre eine plastische Verformung erfahren. Ebenso werden beim Schneiden und/oder Crimpen entsprechende Pressbacken um das Werkstück herum angeordnet und beim Schließen der Pressbacken wird eine Kraft auf das Werkstück ausgeübt, um das Werkstück zu schneiden oder zu crimpen.

Der Pressvorgang wird bei Pressmaschinen des Standes der Technik in der Regel dadurch beendet, dass bei Erreichen eines bestimmten Maximaldrucks ein Überdruckventil geöffnet wird. Durch den festgelegten Maximaldruck stellt man sicher, dass eine geeignet hohe Presskraft auf das Werkstück ausgeübt wurde, um eine ausreichende Verpressung zu gewährleisten. Zur Erzeugung der erforderlichen hohen Presskräfte sind Pressmaschinen typischerweise mit einer elektrohydraulischen Umwandlungseinrichtung verbunden. Die Umwandlungseinrichtung umfasst einen Arbeitszylinder, der die Pressbacken antreibt. Der Arbeitszylinder ist hydraulisch mit einem Druckzylinder verbunden, der mittels eines Antriebs angetrieben wird. Der Antrieb umfasst typischerweise einen Elektromotor. Wird der Druckzylinder angetrieben, wird das Hydrauliköl in den Arbeitszylinder gepresst. Sobald die erforderliche Presskraft erreicht ist, öffnet ein Überdruckventil und das Hydrauliköl kann zurück in ein druckloses Reservoir strömen und der Arbeitszylinder kann zurückgefahren werden. Die Öffnung des Überdruckventils führt zu einem sprunghaften Abfall des Motorstroms. Dies wird von einer Steuerung der Pressmaschine erkannt und der Elektromotor nachfolgend abgeschaltet.

Bei bekannten Pressmaschinen führt das Öffnen des Überdruckventils zum Öffnen eines weiteren Ventils (im Weiteren Umschaltventil genannt), sodass Hydrauliköl aus dem Druckzylinder zurück in das drucklose Reservoir strömen kann. Somit kann auch der Druckzylinder zurückgefahren werden Nach dem Zurückfahren des Arbeits- und Druckzylinders wird das Umschaltventil geschlossen, d.h. das Hydrauliköl kann nun nur noch vom Druckzylinder in den Arbeitszylinder strömen und die Pressmaschine ist bereit für einen neuen Presszyklus.

Somit umfasst eine bekannte Pressmaschine eine elektrohydraulische Umwandlungseinrichtung die zumindest einen Arbeitszylinder (mit Kolben), einen Druckzylinder (mit Kolben), Antrieb sowie ein Überdruckventil und ein Umschaltventil umfasst. Insbesondere die Bereitstellung von Überdruckventil und steuerbaren Umschaltventil führt zu einer komplexen Struktur und einer großen Baugröße bekannter Pressmaschinen.

Es ist daher die Aufgabe der vorliegenden Erfindung eine Pressmaschine bereitzustellen, die eine geringere Komplexität und Baugröße aufweist. Durch eine geringe Baugröße können Pressmaschinen variabler eingesetzt werden. Insbesondere können mit kleinen Pressmaschine Rohrverbindungen in beengten Installationsräumen mittels Verpressen ermöglicht werden.

### 3. Zusammenfassung der Erfindung

Diese Aufgabe wird durch eine anspruchsgemäße Pressmaschine sowie durch ein Verfahren zum Betreiben dieser Pressmaschine gelöst.

Insbesondere wird die Aufgabe durch eine Pressmaschine gelöst, welche einen Antrieb, ein Reservoir zum Breitstellen eines Hydraulikfluids, eine Koppelschnittstelle zum Koppeln der Pressmaschine mit einer Pressbackenanordnung und eine hydraulische Pumpen-Ventilvorrichtung aufweist. Die Pressmaschine kann insbesondere eine Rohrpressmaschine sein und zum sicheren Verpressen von Rohren und/oder Fittings eingerichtet sein. Ebenso kann die Pressmaschine eine Schneidemaschine, eine CrimpMaschine oder eine ähnliche Maschine sein.

Die Koppelschnittstelle kann derart mit der Pressbackenanordnung koppeln, dass die Pressmaschine Pressbacken der Pressbackenanordnung antreiben kann. Die Koppelschnittstelle kann dabei so ausgestaltet sein, dass die Pressbackenanordnung ausgetauscht werden kann um unterschiedliche Pressbackenanordnungen mit der Pressmaschine koppeln zu können. Ebenso kann die Koppelschnittstelle zur fixen Aufnahme einer Pressbackenanordnung eingerichtet sein, sodass ein Austausch der Pressbackenanordnung nicht ohne weiteres möglich ist. Beispielsweise kann eine Pressmaschine zum Verpressen von Fittings eine Koppelschnittstelle aufweisen, die es ermöglicht, dass die Pressbackenanordnung ausgetauscht werden kann. Ebenso kann einen Pressmaschine, insbesondere zum Einsatz im Elektrobereich, wie beispielsweise zum Schneiden von Kabeln, eine Koppelschnittstelle zur fixen Aufnahme einer Pressbackenanordnung aufweisen.

Beispielsweise erfolgt die Kopplung über zumindest einen Koppelbolzen und/oder eine Koppelrolle. Die Pressbackenanordnung umfasst weiterhin Pressbacken, wobei zumindest eine Pressbacke austauschbar sein kann. Zumindest eine der Pressbacken der Pressbackenanordnung ist beweglich eingerichtet. Somit können die Pressbacken geschlossen und geöffnet, d.h. auseinandergefahren, werden. Im auseinandergefahrenen Zustand kann beispielsweise ein rohrförmiges Werkstück, wie ein Fitting, zwischen den Pressbacken angeordnet werden kann. Beim Schließen der Pressbacken wird das Werkstück plastisch verformt. Insbesondere können unterschiedliche Pressbackenanordnungen und/oder Pressbacken für unterschiedliche Aufgaben konzipiert sein, wie beispielsweise Pressen, Crimpen, oder Schneiden, und sich hinsichtlich Form und Material unterscheiden. Beispielsweise kommen zum Verpressen von Kupferfittings andere Pressbacken/Pressbackenanordnungen zum Einsatz, als beim Verpressen von (Edel-) Stahlfittings. Die Pressmaschine kann durch den Austausch der Pressbacken/Pressbackenanordnung an unterschiedliche Werkstücke, insbesondere Fittings, angepasst werden. Ebenso können die Pressbacken/Pressbackenanordnung an die Geometrie des zu bearbeitenden Werkstücks angepasst sein.

Die hydraulische Pumpen-Ventilvorrichtung der Pressmaschine weist einen Druckzylinder, in welchem ein Druckkolben beweglich gelagert ist auf, wobei der Druckkolben mittels des Antriebs antreibbar ist. Insbesondere kann der Antrieb ein drehender Antrieb sein und ein Getriebeelement umfassen, dass die Drehbewegung des Antriebs in eine lineare Bewegung umsetzt. Weithin umfasst die hydraulische Pumpen-Ventilvorrichtung einen Arbeitszylinder, in welchem ein Arbeitskolben beweglich gelagert ist, um von einer ersten Stellung in eine zweite Stellung bewegt zu werden. Der Arbeitszylinder ist fluidisch mit dem Druckzylinder verbunden, sodass Hydraulikfluid mittels des Druckkolbens vom Druckzylinder in den Arbeitszylinder getrieben werden kann. Somit kann auf den Arbeitskolben einen Pressdruck aufgebracht werden und in Folge des Drucks kann der Arbeitskolben in die zweite Stellung bewegt werden.

Die Zylinder bzw. Kolben der hydraulischen Pumpen-Ventilvorrichtung können dabei so gewählt sein, dass ein gewünschtes Übersetzungsverhältnis erreicht wird. Mögliche Hydraulikfluide sind Hydrauliköle nach ISO 6743/4 nach DIN 51524. Andere Hydraulikfluide sind ebenso einsetzbar.

In der ersten Stellung sind die Pressbacken typischerweise geöffnet und der Arbeitskolben zumindest teilweise eingefahren. Wird der Kolben aus der ersten Stellung in Richtung der zweiten Stellung hinausbewegt, so beginnen sich die geöffneten Pressbacken zu schließen. Beim Erreichen der zweiten Stellung sind die Pressbacken typischerweise geschlossen. Der Arbeitskolben ist zumindest teilweise ausgefahren und im Arbeitszylinder wurde ein vordefinierter maximaler Pressdrucks erreicht. Beim Bewegen des Arbeitskolbens von der ersten in die zweite Stellung kommt es somit zur plastischen Verformung eines Werkstücks, wenn eine Pressbackenanordnung mit der Pressmaschine gekoppelt ist und ein geeignetes Werkstück in der Pressbackenanordnung aufgenommen ist. Dazu ist der Arbeitskolben mit der Koppelschnittstelle gekoppelt und die Koppelschnittstelle ist dazu eingerichtet, eine Presskraft vom Arbeitskolben auf die Pressbackenanordnung zu übertragen, wenn die Pressbackenanordnung mit der Koppelschnittstelle gekoppelt ist. Mittels des Arbeitskolbens wird der im Arbeitszylinder herrschende Pressdruck in eine Presskraft gewandelt, die an die Pressbackenanordnung bzw. die Pressbacken übertragen wird.

Zudem umfasst die hydraulische Pumpen-Ventilvorrichtung der Pressmaschine ein Überdruckventilelement, welches dazu eingerichtet ist, einen ersten Fluiddurchgang vom Arbeitszylinder zum Reservoir beim Erreichen eines vordefinierten maximalen Pressdrucks zu öffnen und diesen ersten Fluiddurchgang offen zu halten bis der Arbeitskolben in die erste Stellung zurückgekehrt ist. Somit ist die Pressmaschine für eine neue Verpressung bereit, d.h. der Arbeitskolben kann nach dem Schließen des ersten Fluiddurchgangs wieder aus der ersten Stellung hinaus in Richtung der zweiten Stellung bewegt werden.

Das Öffnen und Offenhalten des ersten Fluiddurchgangs ermöglicht das Weglassen eines Umschaltventils, welches in bekannten Pressmaschinen notwendig war. Somit ist es möglich eine kleinere und leichtere Pressmaschine zu bauen. Zudem verringern sich der Montageaufwand sowie die Komplexität des Hydrauliksystems.

Insbesondere kann die hydraulische Pumpen-Ventilvorrichtung in einem Gehäusebauteil integriert sein und die Funktionen des Aufbringens des Pressdrucks auf den Arbeitskolben, des Abbrechens der Druckausübung durch Öffnen des ersten Fluiddurchgangs und das Rückströmen des Hydraulikfluids aus dem Arbeitskolben in das Reservoir in einer integrierten Baugruppe vereinen. Somit wird die Komplexität des Hydrauliksystems und die Montage der Pressmaschine vereinfacht.

Zudem kann die hydraulische Pumpen-Ventilvorrichtung ein erstes Ventilelement aufweisen, welches zwischen dem Reservoir und dem Druckzylinder angeordnet ist und dazu eingerichtet ist, einen Rückstrom von Hydraulikfluid aus dem Druckzylinder in das Reservoir zu verhindern. Somit kann sichergestellt werden, dass das Hydraulikfluid vom Druckzylinder in den Arbeitszylinder gefördert wird um den Arbeitskolben in gewünschter Weise anzutreiben und nicht in das Reservoir zurückströmt. Das erste Ventilelement kann insbesondere als Rückschlagventil ausgebildet sein.

Zudem kann die hydraulische Pumpen-Ventilvorrichtung ein zweites Ventilelement aufweisen, welches zwischen dem Arbeitszylinder und dem Druckzylinder angeordnet ist und dazu eingerichtet ist, einen Rückstrom von Hydraulikfluid aus dem Arbeitszylinder in den Druckzylinder zu verhindern. Das zweite Ventilelement kann insbesondere als Rückschlagventil ausgebildet sein. Somit kann sichergestellt werden, dass beim Rückströmen des Hydraulikfluids aus dem Arbeitszylinder in das Reservoir ein definierter Rückstrom stattfindet. Insbesondere wird somit der Druckzylinder mit Hydraulikfluid aus dem Reservoir gefüllt. Typischerweise ist das Hydraulikfluid aus dem Reservoir kühler als das Hydraulikfluid aus dem Arbeitszylinder, sodass ein Überhitzen der Pressmaschine vermieden wird.

Insbesondere können das erste und/oder zweite Ventilelement ein Kugelrückschlagventil oder Tellerrückschlagventil umfassen. Ein Kugelrückschlagventil umfasst einen Fluiddurchgang, der durch ein Kugelelement verschlossen werden kann. Das Kugelelement wird typischerweise mittels eines Federelements auf einen Ventilsitz gedrückt und verschließt den Fluiddurchgang in einer Richtung. Bei einem Tellerrückschlagventil wird anstelle eines Kugelelements eine flache Platte (Tellerelement) als Dichtkörper genutzt.

Vorzugsweise sind zwischen dem Druckzylinder und dem Arbeitszylinder und/oder zwischen dem Arbeitszylinder und dem Reservoir keine Hydraulikleitungsverbindungen, wie Hydraulikschläuche oder Hydraulikverschraubungen angeordnet. Die Fluiddurchgänge, die den Druckzylinder den Arbeitszylinder bzw. den Arbeitszylinder das Reservoir verbinden sind vorzugsweise integral in einem Gehäuseelement ausgebildet. Durch den Wegfall von Hydraulikleitungsverbindungen kann eine kompakte Bauform und ein weniger komplexes Hydrauliksystem realisiert werden.

Insbesondere sind der Druckzylinder, der Arbeitszylinder und das Überdruckventilelement der Pumpen-Ventilvorrichtung in einem gemeinsamen Gehäuse ausgebildet. Beispielsweise können die fluidführenden Kavitäten aus einem Werkstück herausgefräst sein, oder das Gehäuse ist mittels additiver Verfahren, wie beispielsweise 3D-Druck oder Metall-Sinterverfahren hergestellt. Ebenso kann das Gehäuse ein Gussgehäuse sein. Dies ermöglicht eine weitere Reduzierung der Baugröße.

Das Überdruckventilelement kann ein Rastmittel aufweist, welches dazu eingerichtet ist, das Überdruckventilelement in einer geöffneten Stellung zu fixieren, wenn das Überdruckventilelement die geöffnete Stellung erreicht. Das Rastmittel dient somit dem Offenhalten des ersten Fluiddurchgangs nach erfolgtem Öffnen des Überdruckventilelements. Entsprechend kann das Rastmittel entriegelt werden, d.h. das Überdruckventilelement freigeben, um das Überdruckventilelement bzw. den ersten Fluiddurchgang zu schließen.

Der Arbeitskolben kann derart mit dem Rastmittel gekoppelt sein, dass das Rastmittel das Überdruckventilelement freigibt, sodass das Überdruckventilelement schließt, wenn der Arbeitskolben eine vordefinierte Stellung, insbesondere die erste Stellung, erreicht hat. Die Kopplung kann mechanisch sein. Beispielsweise entriegelt der rückfahrende Arbeitskolben das Rastmittel mittels eines Betätigungselements. Die vordefinierte Stellung kann einstellbar sein, beispielsweise über eine Stellschraube. Somit kann der Schließen des ersten Fluiddurchgangs in einfacher Weise in Abhängigkeit der Stellung des Arbeitskolbens erfolgen. Dies stellt sicher, dass der Arbeitskolben in der vordefinierten Stellung ist, bevor der erste Fluiddurchgang geschlossen ist und ein neuer Verpressungszyklus gestartet wird. Ebenso kann die Kopplung mittels eines Sensors erfolgen, der eine Stellung des Arbeitskolbens detektieren. Eine Steuerung der Pressmaschine kann dann ein Signal zum Schließen des Überdruckventilelements in Reaktion auf die erfasste Stellung des Arbeitskolbens ausgeben.

Insbesondere kann der Arbeitszylinder derart mit dem Rastmittel gekoppelt sein, dass das Rastmittel das Überdruckventilelement freigibt, sodass das Überdruckventilelement schließt, wenn der Druck im Arbeitszylinder einen vordefinierten minimalen Pressdruck unterschreitet und der Arbeitskolben in die erste Stellung zurückgehrt ist. Die Drucküberwachung zur Erkennung, ob ein minimalen Pressdruck unterschritten wurde kann insbesondere mittels eines Sensors erfolgen. Die Kopplung zwischen Arbeitszylinder und Rastmittel kann eine elektrische Komponente, wie eine Steuereinrichtung umfassen. Wird ein entsprechender Druckabfall detektiert, kann die Steuereinrichtung ein Signal zum Schließen des Überdruckventilelements ausgeben. Um sicherzustellen, dass der Arbeitskolben in die erste Stellung zurückgehrt ist, kann das Signal zum Schließen des Überdruckventilelements zeitverzögert ausgegeben werden.

Das Rastmittel kann ein mechanisches Rastmittel, insbesondere ein Raststift, und/oder ein magnetisches Rastmittel sein. Ebenso kann das Rastmittel ein elektronisches, ein pneumatisches oder ein hydraulisches Rastmittel sein. Ein mechanisches Rastmittel ermöglicht das Offenhalten des ersten Fluiddurchgangs ohne beim Offenhalten weiter Energie zuführen zu müssen. Beispielsweise rastet das Rastmittel in der geöffneten Stellung des Überdruckventilelements mit einem komplementären Rastmittel ein, um den ersten Fluiddurchgang offen zu halten. Ebenso kann das Überdruckventilelement invers aufgebaut sein. D.h. die initiale Stellung des Überdruckventilelements ist eine geöffnete Stellung und das Rastmittel rastet in der geschlossenen Stellung ein. Ein magnetisches Rastmittel kann einen Permanent- und/oder Elektromagneten umfassen, sodass das Öffnen bzw. Offenhalten des Überdruckventilelements durch entsprechende Bereitstellung elektrischer Energie gesteuert werden kann. Ein elektronisches Rastmittel kann beispielsweise einen Stellmotor umfassen. Die Pressmaschine kann weiterhin ein Einstellmittel umfasst, welches dazu eingerichtet ist, den vordefinierten maximalen Pressdruck und/oder den vordefinierten minimalen Pressdruck anzupassen. Das Einstellmittel kann Hardware und/oder Software, sowie mechanische Komponenten umfassen. Beispielsweise können in der Software der Steuerung der Pressmaschine entsprechende Druckschwellen für den maximalen Pressdruck und/oder den minimalen Pressdruck hinterlegt werden. Diese Druckschwellen können an die jeweils zu verpressenden Werkstücke angepasst werden, um eine Beschädigung der Werkstücke durch zu hohe Presskräfte zu vermeiden. Ebenso kann das Einstellmittel einen Öffnungsdruck des Überdruckventilelements mechanisch variieren. Beispielsweise kann eine Haltefeder des Überdruckventilelements mittels des Einstellelements stärker oder weniger stark vorgespannt werden, um den maximalen Pressdruck anzupassen. Weitere Einstellmittel sind ebenso möglich.

Die Pressmaschine kann weiterhin eine Steuervorrichtung und zumindest einen Sensor umfassen, wobei der Sensor vorzugsweise zur Überwachung des Pressdrucks im Arbeitszylinder eingerichtet ist, und wobei die Steuervorrichtung zumindest das Öffnen des Überdruckventilelements steuert. Somit kann sichergestellt werden, dass ein maximal zulässiger Pressdruck nicht überschritten wird.

Der vordefinierte maximale Pressdruck kann so gewählt sein, dass die Pressmaschine dazu eingerichtet ist mittels der Pressbacken auf ein Werkstück eine Presskraft von zumindest 8 kN, bevorzugt von zumindest 10 kN, noch bevorzugter von zumindest 19 kN, noch bevorzugter von zumindest 24 kN und am bevorzugtesten von zumindest 32 kN aufzubringen. Somit können Werkstücke unterschiedlicher Materialen plastisch verformt werden. In anderen Anwendungsbereichen, kann der vordefinierte maximale Pressdruck so gewählt sein, dass die Pressmaschine dazu eingerichtet ist mittels der Pressbacken auf ein Werkstück eine Presskraft von zumindest 60 kN, bevorzugt von zumindest 108 kN, noch bevorzugter von zumindest 120 kN noch bevorzugter von zumindest 130 kN und am bevorzugtesten von zumindest 150 kN aufzubringen.

Der Antrieb der Pressmaschine umfasst vorzugsweise einen Elektromotor sowie optional ein Getriebe sowie insbesondere bevorzugt ein Exzenterelement umfasst. Elektromotoren sind insbesondere für handgehaltene Pressmaschinen geeignet, da Elektromotoren mittels eines Akkus betrieben werden können. Somit entfallen Zuführungsleitungen zur Pressmaschine. Das Getriebe kann insbesondere ein Planetengetriebe sein und eine Untersetzung bereitstellen. Mittels des Exzenters kann eine Drehbewegung in eine lineare Bewegung gewandelt werden und so der Druckkolben angetrieben werden.

Die Aufgabe wird weiterhin durch ein Verfahren zum Betreiben einer Pressmaschine, insbesondere zum plastischen Verformen eines rohrförmigen Werkstücks, gelöst. Die Pressmaschine ist dabei eine Pressmaschine, wie sie vorhergehend beschrieben wurde. Der Fachmann erkennt, dass mittels des Verfahrens alle Vorteile der zuvor beschrieben Pressmaschine erreicht werden können. Das Verfahren weist zumindest die folgenden Verfahrensschritte auf:
a) Bereitstellen einer Pressmaschine,
b) Bereitstellen einer Pressbackenanordnung, umfassend zumindest eine Pressbacke (21a, 21b),
c) Koppeln der Pressbackenanordnung mit der Koppelschnittstelle der Pressmaschine,
d) Greifen des Werkstücks mittels der zumindest einen Pressbacke,
e) Antreiben des Druckkolbens mittels des Antriebs um Hydraulikfluid mittels des Druckkolbens vom Druckzylinder in den Arbeitszylinder zu treiben,
f) Aufbringen von Pressdruck auf den Arbeitskolben um den Arbeitskolben in eine zweite Stellung zu bewegen,
g) Übertragen von Presskraft vom Arbeitskolben auf die Pressbackenanordnung um das gegriffene Werkstück plastisch zu verformen,
h) Öffnen des ersten Fluiddurchgangs mittels des Überdruckventilelements beim Erreichen eines vordefinierten maximalen Pressdrucks, und
i) Offenhalten des ersten Fluiddurchgangs bis der Arbeitskolben in die erste Stellung zurückgekehrt ist.

Anschließend können die Schritte d) bis i) wiederholt werden um einen neuen Presszyklus durchzuführen.

### 4. Detaillierte Beschreibung bevorzugter Ausführungsformen

Im Folgenden werden bevorzugte Ausführungsformen der vorliegenden Erfindung anhand der beigefügten Figuren dargestellt. Dabei zeigt:
- Figur 1: eine schematische Darstellung einer Ausführungsform einer Pressmaschine;
- Figur 2: eine schematische Darstellung einer Ausführungsform der Pressmaschine als hydraulisches Handpressgerät gemäß der vorliegenden Erfindung, und
- Figur 3: eine weitere schematische Darstellung einer Ausführungsform einer Pressmaschine.

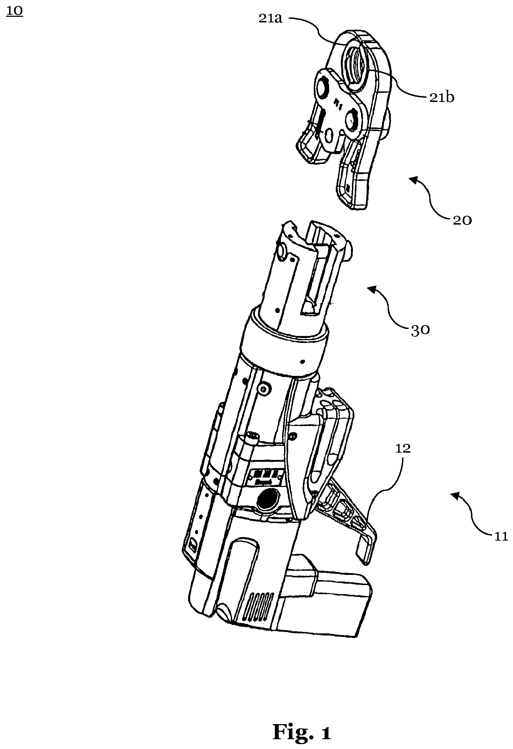

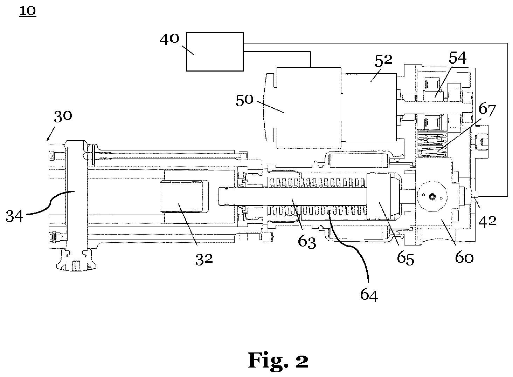

In Figur 1 ist eine Pressmaschine 10 gemäß einer Ausführungsform der vorliegenden Erfindung gezeigt. Die Pressmaschine 10 umfasst dabei ein Handteil 11, welches von einem Bediener bzw. Nutzer handgeführt werden kann. An das Handteil 11 kann eine Pressbackenanordnung 20 lösbar gekoppelt werden. Die Pressbackenanordnung 20 umfasst zwei Pressbacken 21a, 21b mittels welchen ein Fitting (nicht gezeigt) gegriffen und plastisch verformt werden kann. Hierzu ist in dem Handteil 11 zumindest ein Motor und ein Hydrauliksystem (vgl. Fig. 2) bereitgestellt, welche über eine Koppelschnittstelle 30 die Pressbackenanordnung 20 antreiben und letztlich zumindest eine der Pressbacken 21a, 21b bewegen kann, um das Fitting zu verformen. Zum Verformen des Fittings kann ein Bediener einen entsprechenden Betätigungshebel 12 betätigen: Durch entsprechendes Betätigen des Betätigungshebels 12 werden die Pressbacken 21a, 21b auseinandergefahren, um ein Fitting zu greifen, und anschließend zusammengedrückt, um das Fitting zu Verformen.

Figur 2 zeigt eine schematische Schnittdarstellung einer Pressmaschine 10 nach einer Ausführungsform der vorliegenden Erfindung. Die Pressmaschine 10 umfasst einen Antrieb, der einen Elektromotor 50, ein Getriebe 52 sowie ein Exzenterelement 54 umfasst. Der Motor 50 wird durch eine Steuervorrichtung 40 gesteuert. Die Antriebsenergie des Motors 50 wird durch das Getriebe 52, beispielsweise ein Planetengetriebe, untersetzt und auf das Exzenterelement 54 übertragen. Das Exzenterelement 54 treibt wiederum einen Druckkolben (nicht gezeigt) an, welcher in einem Druckzylinder 67 beweglich gelagert ist.

Der Druckkolben verdrängt Hydraulikfluid, welches vom Druckzylinder 67 in einen Arbeitszylinder 65 geleitet wird. Auf das Hydraulikfluid wird dabei ein Pressdruck aufgebracht, welcher auf den Arbeitskolben (nicht gezeigt) im Arbeitszylinder wirkt. Der Arbeitskolben ist mit einer Koppelschnittstelle 30 gekoppelt. Dazu kann die Pressmaschine 10 ein Verbindungselement 63 umfassen, welches den Arbeitskolben mit der Koppelschnittstelle 30 in der Art verbindet, dass Kraft übertragen werden kann.

Die Koppelschnittstelle 30 dient der Aufnahme einer Pressbackenanordnung. Beispielsweise kann eine Pressbackanordnung, wie sie in Fig. 1 gezeigt ist, mittels des Koppelbolzens 34 mit der Pressmaschine 10 gekoppelt werden. Eine Koppelrolle 32 ermöglicht weiterhin, die Übertragung der Presskraft bzw. der Relativbewegung des Arbeitskolbens auf die zumindest eine bewegliche Pressbacke 21a, 21b der Pressbackenanordnung.

Weiterhin umfasst die Pressmaschine 10 eine Pumpenventilvorrichtung 60. Die Pumpenventilvorrichtung umfasst unter anderem den Druckzylinder 67 sowie den Arbeitszylinder 65. Der Druck im Arbeitszylinder 65 wird beispielsweise mittels eines Sensors 42 überwacht. Die Steuervorrichtung 40 erfasst die Sensordaten des Sensors 42 und kann beim Erreichen eines Maximaldrucks das Überdruckventilelement 82 der Pressmaschine 10 öffnen und offenhalten, sodass Hydraulikfluid aus dem Arbeitszylinder 65 zurück in das Reservoir 70 strömen kann.

Um den Arbeitskolben von der zweiten Stellung zurück in die erste Stellung zu treiben, umfasst die Pressmaschine 10 vorzugsweise ein erstes Federelement 64, welches vorliegend als Druckfeder ausgestaltet ist. Das erste Federelement 64 treibt den Arbeitskolben von der zweiten Stellung, in der die Pressbacken 21a, 21b geschlossen sind, in die erste Stellung zurück. In dieser Stellung sind die Pressbacken 21a, 21b zumindest teilweise geöffnet. Beim Rückbewegen des Arbeitskolbens 67 von der zweiten Stellung in die erste Stellung fließt Hydraulikfluid aus dem Arbeitszylinder 65 zurück in das Reservoir (hier nicht gezeigt).

Weiterhin umfasst die Pressmaschine 10 ein zweites Federelement 69, welches den Druckkolben in seine Ausgangsstellung drängt, wenn der Druckkolben mittels des Antriebs nicht angetrieben wird und das Überdruckventilelement geöffnet ist. In der Ausgangsstellung des Druckkolbens ist der Druckzylinder zumindest teilweise mit Hydraulikfluid gefüllt. Folglich ist die Pressmaschine, wenn der Druckkolben in der Ausgangsstellung ist, bereit für einen (neuen) Presszyklus.

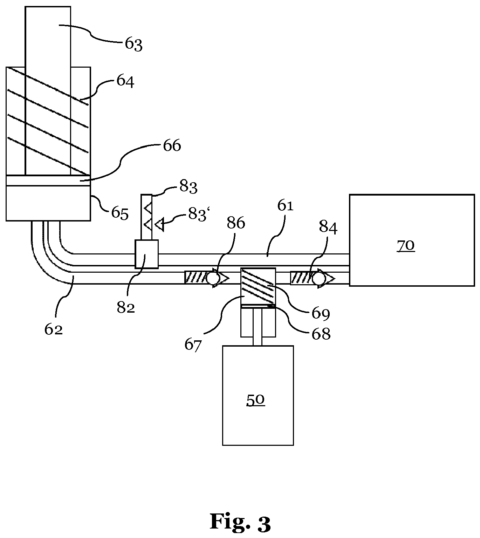

Figur 3 zeigt eine schematische Darstellung der Pumpenventilvorrichtung 60. Die Pumpenventilvorrichtung 60 ist mit einem Reservoir 70 gekoppelt, welches Hydraulikfluid bereitstellt. Weiterhin ist die Pumpenventilvorrichtung 60 mittels des Druckkolbens 68 mit dem Elektromotor 50 gekoppelt. Die Koppelung kann über weitere Antriebselemente, wie ein Exzenterelement 54 und/oder ein Getriebe 52 erfolgen. In Figur 3 ist die Koppelung vereinfacht dargestellt. Mögliche Getriebe oder Exzenterelemente sind nicht dargestellt.

Die Pumpenventilvorrichtung 60 umfasst erste und zweite Fluidleitungen 61, 62, wobei die erste Fluidleitung 61 das Reservoir 70 mit dem Arbeitszylinder 65 fluidisch verbindet. Die zweite Fluidleitung 62 verbindet den Arbeitszylinder und den Druckzylinder fluidisch miteinander. Diese Fluidleitungen sind vorzugsweise in einem Gehäuseelement integral ausgebildet, sodass keine Hydraulikleitungsverbindungen zwischen den einzelnen Komponenten der Pumpenventilvorrichtung 60 notwendig sind. Somit werden potentielle Leckagestellen vermieden und es wird ein einfacher, platzsparender Aufbau erreicht. Insbesondere kann mittels des integralen Aufbaus ein hoher Arbeitsdruck in der Pumpenventilvorrichtung 60 erreicht werden, sodass entsprechend kompakte Pressmaschinen eine sehr hohe Presskraft breitstellen können.

In dem Druckzylinder 67 ist ein Druckkolben 68 beweglich gelagert, wobei der Druckkolben 68 mittels des Elektromotors 50 angetrieben werden kann. In der initialen Stellung (Ausgangsstellung) ist der Druckzylinder 68 mit Hydraulikfluid gefüllt. Wird der Druckkolben 68 angetrieben, drängt er Hydraulikfluid aus dem Druckzylinder 67 in Richtung des Arbeitszylinders 65. Um den Druckzylinder 68 in seine Ausgangsstellung zurück drängen zu können, ist im Druckzylinder 67 eine Druckfeder 69 vorgesehen.

Der Arbeitszylinder 65 umfasst einen gleitend gelagerten Arbeitskolben 66. In einer ersten Stellung ist der Arbeitskolben 66 zumindest teilweise eingefahren. Wird der Arbeitszylinder 65 mit Pressdruck beaufschlagt, kann der Arbeitskolben 66 aus der ersten Stellung hinausbewegt und in eine zweite Stellung gefahren werden. Die Beaufschlagung mit Pressdruck erfolgt mittels des Druckkolbens 68, wie oben beschrieben. Beim Bewegen des Arbeitskolbens 66 von der ersten in die zweite Stellung wird eine mit der Pressmaschine 10 gekoppelte Pressbackenanordnung geschlossen, um ein Werkstück plastisch zu verformen.

Um den Arbeitskolben 66 von der zweiten Stellung zurück in die erste Stellung zu bewegen, wird die erste Fluidleitungen 61 zwischen Arbeitszylinder 65 und Reservoir 70 geöffnet. Dazu wird das Überdruckventilelement 82 geöffnet. Ein erstes Federelement 64 kann dann den Arbeitskolben 66 zurück in die erste Stellung drängen.

Das Überdruckventilelement 82 wird insbesondere beim Erreichen eines voreingestellten maximalen Pressdrucks im Arbeitszylinder 65 geöffnet und anschließend offengehalten, sodass Hydraulikfluid vom Arbeitszylinder 65 zurück in das Reservoir 70 strömen kann.

Das Offenhalten des Überdruckventilelements 82 erfolgt mittels des Rastmittels 83, welches mit einem komplementären Rastmittel 83' einrasten kann. In Figur 3 ist ein mechanisches Rastmittel 83 gezeigt. Ebenso kann das Rastmittel 83 auch ein magnetisches Rastmittel sein. Beispielsweise kann das Rastmittel einen Permanentmagnet umfassen, der mit einem komplementären Rastmittel 83', welches einen Elektromagnet umfasst, einrastet. Andere Rastmittel, bzw. komplementäre Rastmittel 83' zum Offenhalten des Überdruckventilelements 82 sind ebenso möglich.

Um sicherzustellen, dass Hydraulikfluid in der zweiten Fluidleitung 62 ausschließlich vom Reservoir 70 in Richtung Druckzylinder 67 zum Arbeitszylinder 65 strömt, können zwischen Druckzylinder 67 und Reservoir 70 als auch zwischen Arbeitszylinder 65 und Druckzylinder 67 erste und zweite Ventilelemente 84, 86 ausgebildet sein, welches ein Rückströmen des Hydraulikfluids in Richtung Reservoir 70 verhindern. Somit ist eine definierte Flussrichtung des Hydraulikfluids in der Pumpenventilvorrichtung 60 vorgegeben. Das Fluid strömt während eines Presszyklus vom Reservoir 70 in den Druckzylinder 67. Von dort wird es in den Arbeitszylinder 65 gedrängt und kann nach Öffnen des Überdruckventilelements 82 zurück in das Reservoir 70 kehren, um erneut dem Druckzylinder 67 breit gestellt zu werden.

Insbesondere kann das erste und/oder zweite Ventilelement 84, 86 als Rückschlagventil ausgebildet sein. Durch das Offenhalten der ersten Fluidleitung 61 mittels des Überdruckventilelements 82 kann der Arbeitskolben 66 in die erste Stellung zurückgefahren werden. Nach Erreichen der ersten Stellung kann das Überdruckventilelement 82 wieder geschlossen werden. Nach dem Schließen des Überdruckventilelements 82 ist die Pressmaschine bereit für einen weiteren Presszyklus.

### Bezugszeichenliste

- 10: Pressmaschine
- 11: Handteil
- 12: Betätigungshebel
- 20: Pressbackenanordnung
- 21a, 21b: Pressbacke
- 30: Koppelschnittstelle
- 32: Koppelrolle
- 34: Koppelbolzen
- 40: Steuervorrichtung
- 42: Sensor
- 50: Elektromotor
- 52: Getriebe
- 54: Exzenterelement
- 60: Pumpen-Ventilvorrichtung
- 61: erste Fluidleitung
- 62: zweite Fluidleitung
- 63: Verbindungselement
- 64: erstes Federelement
- 65: Arbeitszylinder
- 66: Arbeitskolben
- 67: Druckzylinder
- 68: Druckkolben
- 69: zweites Federelement
- 70: Reservoir
- 82: Überdruckventilelement
- 83: Rastmittel
- 83': komplementäres Rastmittel
- 84: erstes Ventilelement
- 86: zweites Ventilelement

## Patentansprüche

1. Pressmaschine (10), insbesondere eine Rohrpressmaschine, zum plastischen Verformen eines rohrförmigen Werkstücks, aufweisend:
einen Antrieb (50, 52, 54);
ein Reservoir (70) zum Breitstellen eines Hydraulikfluids;
eine Koppelschnittstelle (30), zum Koppeln der Pressmaschine (10) mit einer Pressbackenanordnung (20), und
eine hydraulische Pumpen-Ventilvorrichtung (60), wobei die hydraulische Pumpen-Ventilvorrichtung (60) aufweist:
einen Druckzylinder (67), in welchem ein Druckkolben (68) beweglich gelagert ist, wobei der Druckkolben mittels des Antriebs antreibbar ist;
einen Arbeitszylinder (65), in welchem ein Arbeitskolben (66) beweglich gelagert ist, um von einer ersten Stellung in eine zweite Stellung bewegt zu werden, wobei der Arbeitszylinder mit dem Druckzylinder (67) fluidisch verbunden ist, sodass Hydraulikfluid mittels des Druckkolbens (68) vom Druckzylinder (67) in den Arbeitszylinder (65) getrieben werden kann um auf den Arbeitskolben (66) einen Pressdruck aufzubringen und diesen in die zweite Stellung zu bewegen, wobei
der Arbeitskolben (66) mit der Koppelschnittstelle (30) gekoppelt ist, und wobei die Koppelschnittstelle (30) dazu eingerichtet ist, eine Presskraft vom Arbeitskolben (66) auf eine Pressbackenanordnung (20) zu übertragen, wenn die Pressbackenanordnung (20) mit der Koppelschnittstelle (30) gekoppelt ist;
ein Überdruckventilelement (82), welches dazu eingerichtet ist, einen ersten Fluiddurchgang (61) vom Arbeitszylinder (65) zum Reservoir (70) beim Erreichen eines vordefinierten maximalen Pressdrucks zu öffnen, und wobei das Überdruckventilelement (82) weiter dazu eingerichtet ist, den ersten Fluiddurchgang (61) offen zu halten bis der Arbeitskolben (66) in die erste Stellung zurückgekehrt ist.

2. Pressmaschine (10) nach Anspruch 1, wobei die hydraulische Pumpen-Ventilvorrichtung (60) weiterhin ein erstes Ventilelement (84) aufweist, welches zwischen dem Reservoir (70) und dem Druckzylinder (67) angeordnet ist und dazu eingerichtet ist, einen Rückstrom von Hydraulikfluid aus dem Druckzylinder (67) in das Reservoir (70) zu verhindern.

3. Pressmaschine (10) nach einem der vorhergehenden Ansprüche, wobei die hydraulische Pumpen-Ventilvorrichtung (60) weiterhin ein zweites Ventilelement (86) aufweist, welches zwischen dem Arbeitszylinder (65) und dem Druckzylinder (67) angeordnet ist und dazu eingerichtet ist, einen Rückstrom von Hydraulikfluid aus dem Arbeitszylinder (65) in den Druckzylinder (67) zu verhindern.

4. Pressmaschine (10) nach einem der Ansprüche 2 oder 3, wobei das erste und/oder zweite Ventilelement (84, 86) ein Kugelrückschlagventil oder Tellerrückschlagventil umfasst.

5. Pressmaschine (10) nach einem der vorhergehenden Ansprüche, wobei zwischen dem Druckzylinder (67) und dem Arbeitszylinder (65) und vorzugsweise zwischen dem Arbeitszylinder (65) und dem Reservoir (70) keine Hydraulikleitungsverbindungen angeordnet sind.

6. Pressmaschine (10) nach einem der vorhergehenden Ansprüche, wobei die Druckzylinder (67), der Arbeitszylinder (65) und das Überdruckventilelement (82) der Pumpen-Ventilvorrichtung (60) in einem gemeinsamen Gehäuse ausgebildet sind.

7. Pressmaschine (10) nach einem der vorhergehenden Ansprüche, wobei
das Überdruckventilelement (82) ein Rastmittel (83) aufweist, welches dazu eingerichtet ist, das Überdruckventilelement (82) in einer geöffneten Stellung zu fixieren, wenn das Überdruckventilelement (82) die geöffnete Stellung erreicht.

8. Pressmaschine (10) nach Anspruch 7, wobei der Arbeitskolben (66) derart mit dem Rastmittel (83) gekoppelt ist, dass das Rastmittel (83) das Überdruckventilelement (82) freigibt, sodass das Überdruckventilelement (82) schließt, wenn der Arbeitskolben (66) eine vordefinierte Stellung, insbesondere die erste Stellung, erreicht hat.

9. Pressmaschine (10) nach Anspruch 7, wobei der Arbeitszylinder (65) derart mit dem Rastmittel (83) gekoppelt ist, dass das Rastmittel (83) das Überdruckventilelement (82) freigibt, sodass das Überdruckventilelement (82) schließt, wenn der Druck im Arbeitszylinder (65) einen vordefinierten minimalen Pressdruck unterschreitet und der Arbeitskolben (66) in die erste Stellung zurückgehrt ist.

10. Pressmaschine (10) nach einem der Ansprüche 7 bis 9, wobei das Rastmittel (83) ein mechanisches Rastmittel, insbesondere ein Raststift, und/oder ein magnetisches Rastmittel ist.

11. Pressmaschine (10) nach einem der vorhergehenden Ansprüche, wobei die Pressmaschine (10) weiterhin ein Einstellmittel umfasst, welches dazu eingerichtet ist, den vordefinierten maximalen Pressdruck und/oder den vordefinierten minimalen Pressdruck anzupassen.

12. Pressmaschine (10) nach einem der vorhergehenden Ansprüche, wobei die Pressmaschine (10) weiterhin eine Steuervorrichtung (40) und zumindest einen Sensor (42) umfasst, wobei der Sensor vorzugsweise zur Überwachung des Pressdrucks im Arbeitszylinder (65) eingerichtet ist, und wobei die Steuervorrichtung (40) zumindest das Öffnen des Überdruckventilelements (82) steuert.

13. Pressmaschine (10) nach einem der vorhergehenden Ansprüche, wobei der vordefinierte maximale Pressdruck so gewählt ist, dass die Pressmaschine (10) dazu eingerichtet ist mittels der Pressbacken (21a, 21b) auf ein Werkstück eine Presskraft von zumindest 8 kN, bevorzugt von zumindest 10 kN, noch bevorzugter von zumindest 19 kN, noch bevorzugter von zumindest 24 kN und am bevorzugtesten von zumindest 32 kN aufzubringen.

14. Pressmaschine (10) nach einem der vorhergehenden Ansprüche, wobei der Antrieb einen Elektromotor (50) und vorzugsweise ein Getriebe (52) sowie insbesondere bevorzugt ein Exzenterelement (54) umfasst.

15. Verfahren zum Betreiben einer Pressmaschine (10), insbesondere zum plastischen Verformen eines rohrförmigen Werkstücks, das Verfahren aufweisend:
Bereitstellen einer Pressmaschine (10) nach einem der Ansprüche 1 bi 14;
Bereitstellen einer Pressbackenanordnung (20), umfassend zumindest eine Pressbacke (21a, 21b);
Koppeln der Pressbackenanordnung (20) mit der Koppelschnittstelle (30) der Pressmaschine (10);
Greifen des Werkstücks mittels der zumindest einen Pressbacke (21a, 21b);
Antreiben des Druckkolbens (68) mittels des Antriebs um Hydraulikfluid mittels des Druckkolbens (68) vom Druckzylinder (67) in den Arbeitszylinder (65) zu treiben;
Aufbringen von Pressdruck auf den Arbeitskolben (66) um den Arbeitskolben (66) in eine zweite Stellung zu bewegen,
Übertragen von Presskraft vom Arbeitskolben (66) auf die Pressbackenanordnung (20) um das gegriffene Werkstück plastisch zu verformen;
Öffnen des ersten Fluiddurchgangs (61) mittels des Überdruckventilelements (82) beim Erreichen eines vordefinierten maximalen Pressdrucks, und
Offenhalten des ersten Fluiddurchgangs (61) bis der Arbeitskolben (66) in die erste Stellung zurückgekehrt ist.
